# EUROPÄISCHE PATENTSCHRIFT

(11) **EP 1 873 884 B1**
(45) Veröffentlichungstag und Bekanntmachung des Hinweises auf die Patenterteilung: **27.04.2011**
(21) Anmeldenummer: 07002247.0
(22) Anmeldetag: 02.02.2007
(51) Int. Cl.: H02H 7/08, H02H 5/04, H02H 6/00, H02H 7/09, H02H 7/12, H02H 7/122

(54) **Schutzschaltung für einen Umrichter**
Protective circuit for a converter
Circuit protecteur pour un convertisseur

(30) Priorität: 23.05.2006 DE 102006024018
(43) Veröffentlichungstag der Anmeldung: 02.01.2008
(73) Patentinhaber: Dr. Johannes Heidenhain GmbH, 83301 Traunreut (DE)
(72) Erfinder: Huber, Norbert, 83317 Teisendorf (DE)

(56) Entgegenhaltungen:
- EP-A- 0 247 996
- EP-A- 1 650 621
- DE-A1-102004 022 005
- GB-A- 1 330 131
- US-A- 4 980 624

## Beschreibung

Die Erfindung betrifft eine Schutzschaltung für einen Umrichter gemäß Anspruch 1. Die Schutzschaltung dient dazu, den Umrichter oder auch einen daran angeschlossenen Motor vor einer Zerstörung durch thermische Überlastung zu bewahren.

Elektromotoren und deren Ansteuerelektroniken (Umrichter) werden häufig an der Grenze ihrer Leistungsfähigkeit betrieben, um mit gegebenem Aufwand (Gewicht, Volumen, Kosten) ein Maximum an Leistung zu erhalten. Dabei ist es wichtig, den Elektromotor und seinen Umrichter nicht zu überhitzen. Steigt die Temperatur über einen gewissen Grenzwert, so werden entweder die Isolation der Windungen des Elektromotors oder auch die Leistungshalbleiter im Umrichter in Mitleidenschaft gezogen. Dies führt unmittelbar oder auch erst nach einer gewissen Zeit zur Zerstörung des Motors oder seiner Ansteuerelektronik.

Es sind daher bereits Vorrichtungen bekannt, mit denen die Temperatur der Windungen eines Elektromotors bzw. der Leistungshalbleiter im Umrichter überwacht werden können. Steigt die Temperatur über einen Grenzwert, so kann die Leistung des Motors verringert und eine Beschädigung vermieden werden.

Eine solche Temperaturüberwachung kann mittels eines Temperatursensors durchgeführt werden. Temperatursensoren weisen jedoch eine gewisse Trägheit auf, so dass mit kurzen und starken Stromspitzen ein Motor bzw. Umrichter zerstört werden kann, noch bevor ein Temperatursensor anspricht. Zudem sitzt der Temperatursensor nicht unmittelbar auf den Chips der Leistungshalbleiter, so dass deren tatsächliche Sperrschichttemperatur nicht gemessen werden kann.

Es sind auch Vorrichtungen bekannt, die ohne einen Temperatursensor auskommen. Zum Betreiben eines Elektromotors wird häufig mittels eines Stromsensors der in den jeweiligen Motorphasen fließende Strom gemessen. Bei bekanntem Innenwiderstand der Motorphasen bzw. der Leistungshalbleiter lässt sich aus den gemessenen Strömen die Verlustleistung in den Windungen bzw. der Leistungshalbleiter berechnen. Mit einem thermischen Modell kann dann auf die jeweilige Temperatur geschlossen werden. Durch das Setzen einer Grenze für die pro Zeitintervall erzeugte Verlustenergie kann der Motor und seine Ansteuerelektronik zuverlässig vor Überhitzung geschützt werden.

Eine solche Vorrichtung ist in der DE 10 2004 022 005 A1 näher beschrieben. In dem dort verwendeten Modell wird berücksichtigt, dass bei einem Stillstand des Motors oder bei sehr niedrigen Drehfrequenzen die in jeder Phase maximal erlaubten Ströme deutlich niedriger sind als bei höheren Drehfrequenzen. Das verwendete Modell lässt sich aber nur in solchen Umrichtern einfach umsetzen, die eine gewisse Rechenleistung erbringen können.

Aufgabe der Erfindung ist es, eine besonders einfach realisierbare Schutzschaltung für einen Umrichter zu schaffen, die die unterschiedlichen Grenzwerte für die Phasenströme des Umrichters bei verschiedenen Drehfrequenzen berücksichtigt.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird eine Schutzschaltung für einen Umrichter mit mehreren Phasen beschrieben, bei der für jeden Phasenstrom ein dem jeweiligen Phasenstrom proportionales Signal einer Übertragerschaltung aufgeschaltet ist, die unterhalb und im Bereich einer Grenzfrequenz als Tiefpassfilter mit der Grenzfrequenz und oberhalb der Grenzfrequenz als Teiler wirkt. Die Ausgänge dieser Übertragerschaltung sind einem Maximumbildner zum Bilden des betragsmäßigen Maximums aufgeschaltet. Dieses Maximum ist auf einen Vergleicher geschaltet, in dem das Maximum mit einem Referenzwert verglichen wird.

Liegt das Maximum über dem Referenzwert, so erzeugt der Vergleicher ein Signal, das z.B. als Abschaltsignal zum Abschalten des Umrichters dienen kann.

Obwohl die Schutzschaltung mit einer recht einfachen Elektronik aufgebaut werden kann, so ist sie doch in der Lage, die Phasenströme abhängig von deren Frequenz (und damit abhängig von der Drehfrequenz des Motors, die bis auf einen Faktor mit der Frequenz der Phasenströme übereinstimmt) zu bewerten. Für recht niedrige Frequenzen unterhalb der Grenzfrequenz werden die den Phasenströmen proportionalen Signale dank der Tiefpasswirkung der Übertragerschaltung unvermindert dem Maximumbildner zugeführt, während oberhalb der Grenzfrequenz die den Phasenströmen proportionalen Signale um ein bestimmtes Verhältnis reduziert (heruntergeteilt) werden. Legt man die Übertragerschaltung geeignet aus, so ist sichergestellt, dass bei hohen Frequenzen oberhalb der Grenzfrequenz deutlich höhere maximale Phasenströme erlaubt sind als bei Frequenzen unterhalb der Grenzfrequenz. Die Grenzfrequenz liegt dabei typischerweise bei wenigen Hertz, z.B. bei ungefähr 3 Hz.

Weitere Vorteile sowie Einzelheiten der vorliegenden Erfindung ergeben sich aus der nachfolgenden Beschreibung bevorzugter Ausführungsformen anhand der Figuren. Dabei zeigt
- Figur 1a: eine schematische Darstellung einer Schutzschaltung,
- Figur 1b: eine schematische Darstellung einer vereinfachten Schutzschaltung,
- Figur 2: frequenzabhängige Maximalströme und eine Übertragungsfunktion der Übertragerschaltung,
- Figur 3: ein erstes konkretes Ausführungsbeispiel, und
- Figur 4: ein zweites konkretes Ausführungsbeispiel.

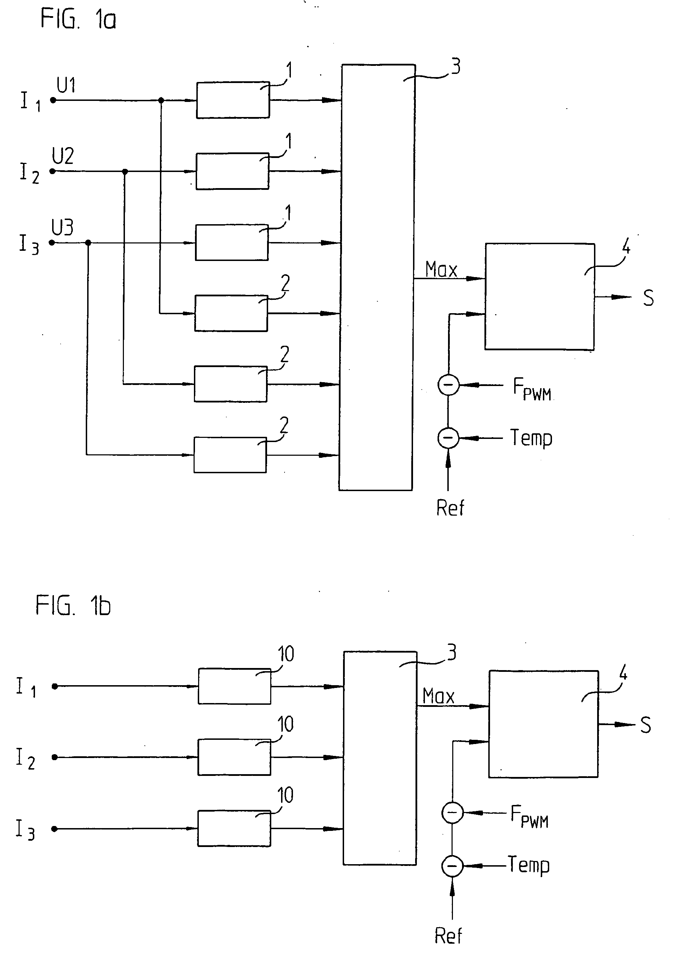

Figur 1a stellt schematisch eine Schutzschaltung für einen Umrichter dar. An deren Eingang liegen den Phasenströmen I1, I2, I3 proportionale Signale U1, U2, U3 an. Diese Signale U1, U2, U3 können beispielsweise mit Stromsensoren ermittelt werden, die den Phasenströmen I1, I2, I3 proportionale Spannungen erzeugen.

Jedes der Signale U1, U2, U3 wird nun parallel einem Tiefpassfilter 1 und einem Teiler 2 zugeleitet. Je ein Tiefpassfilter 1 und ein Teiler 2 bilden daher zusammen eine Übertragerschaltung.

Alle Tiefpassfilter 1 und Teiler 2 sind ausgangsseitig mit einem Maximumbildner 3 verbunden, der von allen Ausgängen den betragsmäßig größten Wert als Maximum Max ermittelt und dieses an einen Vergleicher 4 weiterleitet. Da die Tiefpassfilter 1 bei Frequenzen unterhalb einer Grenzfrequenz die proportionalen Signale U1, U2, U3 unvermindert weiterleiten, während die Teiler 2 auch in diesem Bereich die proportionalen Signale U1, U2, U3 entsprechend ihrem Teilerverhältnis vermindern, wirkt die Parallelschaltung aus je einem Tiefpass 1 und einem Teiler 2 bezüglich der Maximumbildung im Maximumbildner 3 im Bereich niedriger Frequenzen wie ein Tiefpass. Bei Frequenzen deutlich oberhalb der Grenzfrequenz eines Tiefpasses werden die proportionalen Signale U1, U2, U3 sehr stark gedämpft, so dass bezüglich der Maximumbildung im Maximumbildner 3 die Teiler 2 wirksam sind. Betrachtet man die Parallelschaltung aus Tiefpass 1 und Teiler 2 als Übertragerschaltung, so wirkt diese daher bezüglich der Maximumbildung unterhalb und im Bereich einer Grenzfrequenz als Tiefpassfilter und oberhalb der Grenzfrequenz als Teiler.

Der Vergleicher 4 vergleicht das Maximum Max mit einem Referenzwert Ref. Sobald das Maximum über dem Referenzwert liegt, gibt der Vergleicher 4 ein Abschaltsignal S ab, das z.B. zum Abschalten des Umrichters dienen kann, oder auch zu einer Reduzierung der vom Umrichter abgegeben Leistung, so dass der Referenzwert Ref wieder unterschritten wird.

Vorzugsweise wird der Referenzwert Ref noch um einen einer Temperatur proportionalen Wert Temp vermindert. Diese Temperatur kann beispielsweise die Temperatur der Leistungshalbleiter im Umrichter oder von deren Kühlkörpern sein. Es kann auch die Temperatur eines an den Umrichter angeschlossenen Motors bzw. der Spulen eines solchen Motors herangezogen werden. So lässt sich berücksichtigen, dass der maximal erlaubte Phasenstrom 11, 12, 13 auch von der bereits erreichten Temperatur im Umrichter oder im angeschlossenen Motor abhängt.

Der Referenzwert Ref kann außerdem noch um einen der PWM - Frequenz (mit der der Umrichter betrieben wird) proportionalen Wert F_{PWM} erniedrigt werden, denn je höher diese PWM - Frequenz ist, desto höhere Schaltverluste ergeben sich in den Leistungshalbleitern des Umrichters. Damit erhitzen sich die Leistungshalbleiter im Umrichter bei höheren PWM - Frequenzen schneller, ein erniedrigter Referenzwert Ref ist damit sinnvoll.

Durch die Berücksichtigung sowohl der bereits erreichten Temperatur als auch der PWM - Frequenz kann jederzeit ein maximal hoher Grenzwert im Vergleicher 4 berücksichtigt werden. Dieser Grenzwert müsste ansonsten für den schlechtesten Fall ausgelegt werden, also z.B. für Halbleiterschalter, die bereits nahe der Grenztemperatur mit hoher PWM - Frequenz betrieben werden.

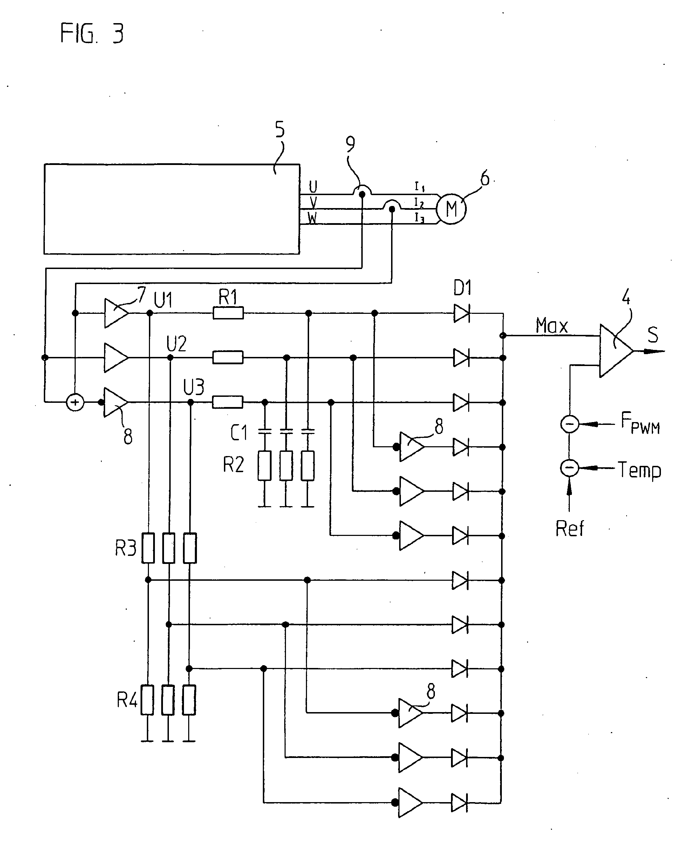

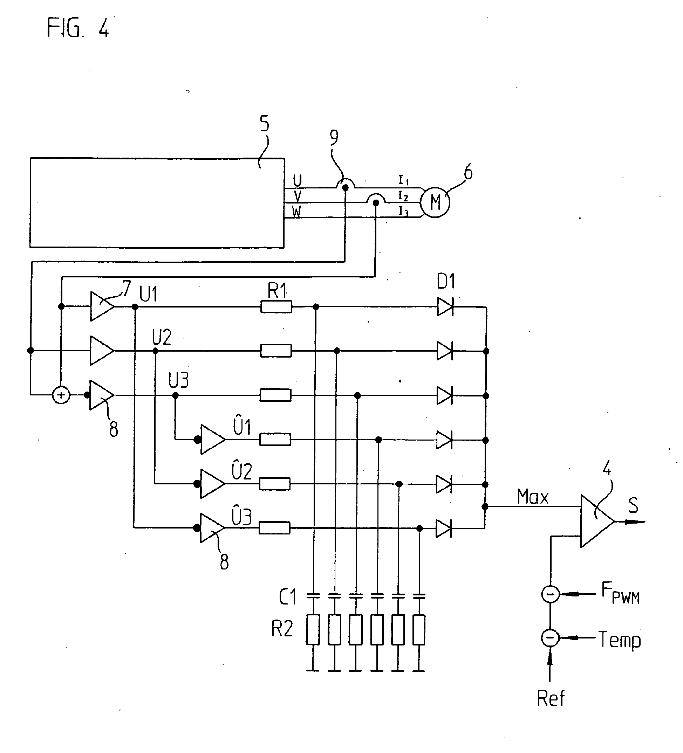

Die Schutzschaltung lässt sich auch vereinfacht wie in der Figur 1b darstellen. Hier sind sozusagen ein Tiefpassfilter 1 und ein Teiler 2 in einer einzigen Übertragerschaltung 10 zusammengefasst. Diese Übertragerschaltung 10 wirkt für tiefe Frequenzen unterhalb und im Bereich der oben erwähnten Grenzfrequenz wie ein Tiefpassfilter 1 mit eben dieser Grenzfrequenz, für hohe Frequenzen deutlich oberhalb der Grenzfrequenz jedoch als Teiler 2. Je eine konkrete schaltungstechnische Realisierung für eine Schutzschaltung gemäß der Figuren 1a und 1b wird weiter unten bzw. in den Figuren 3 und 4 angegeben.

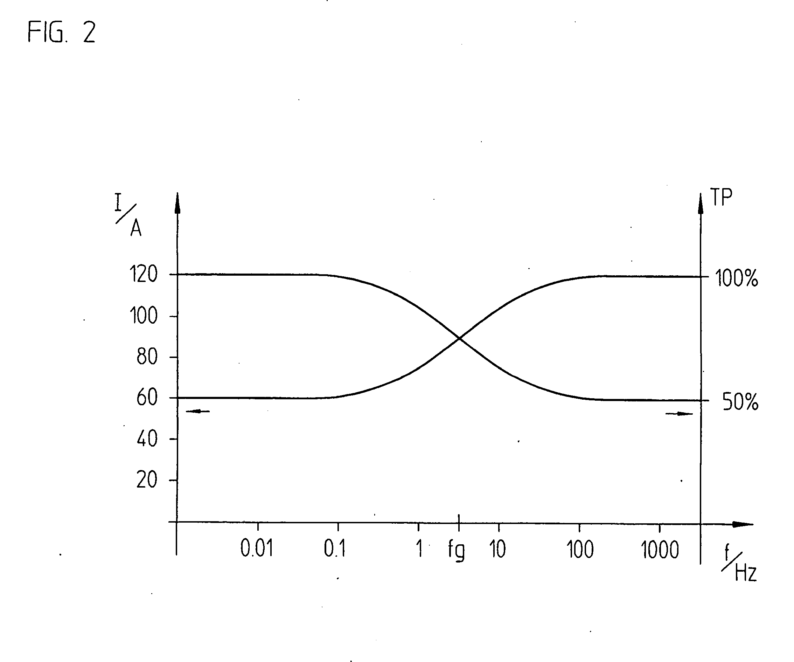

In Figur 2 ist anhand eines realen Beispiels der Verlauf des in einer Phase maximal erlaubten Stromes I abhängig von der Frequenz des Phasenstromes 11, 12, 13 dargestellt. Man erkennt, dass deutlich unterhalb einer Grenzfrequenz fg nur ein gewisser Anteil (60 Ampere) des Stromes I erlaubt ist, der deutlich oberhalb der Grenzfrequenz fg möglich ist (120 A). Dies liegt wie oben bereits erwähnt daran, dass bei hohen Frequenzen die Belastung aller Phasen in etwa gleich ist, während bei niedrigen Frequenzen oder gar bei Stillstand des Motors unter Last eine sehr ungleichmäßige Verteilung der thermischen Verluste in den einzelnen Leistungshalbleitern des Umrichters bzw. in den Motorphasen vorliegt. Im Beispiel liegt zwischen den beiden Grenzwerten ungefähr ein Faktor zwei. Dieser Faktor hängt sehr von den Randbedingungen (Anzahl der Phasen, verwendete Leistungshalbleiter, etc.) ab, das Beispiel betrifft aber einen realen dreiphasigen Umrichter und eignet sich gut, um das Prinzip der Schutzschaltung zu erklären.

Der Tiefpassfilter 1 bzw. die Übertragerschaltung 10 wird nun so ausgelegt, dass es eine Grenzfrequenz gibt, die der Grenzfrequenz fg der gezeigten Stromcharakteristik in etwa entspricht. Deutlich unterhalb der Grenzfrequenz fg lässt die Übertragerschaltung 10 wie ein Tiefpass 100% des proportionalen Signals U1, U2, U3 durch, wie die Übertragungsfunktion TP in Figur 2 zeigt. Deutlich oberhalb der Grenzfrequenz fg liegt dieser Wert konstant bei ca. 50%, entsprechend einem Teilerverhältnis von 1 : 2. Man erkennt, dass die Übertragerschaltung 10 unterhalb und im Bereich der Grenzfrequenz fg als Tiefpassfilter 1 mit der Grenzfrequenz fg und oberhalb der Grenzfrequenz fg als Teiler mit dem Teilerverhältnis 1:2 wirkt.

Im in der in Figur 2 dargestellten Fall ist es dann möglich, den Referenzwert Ref auf 60 Ampere zu setzen. Phasenströme I1, I2, I3 von mehr als 60 Ampere mit einer Frequenz deutlich unterhalb der Grenzfrequenz fg (z.B. kleiner als 0.1 Hz) führen dann zu einem Abschaltsignal S, da das entsprechende Signal U1, U2, U3 ungedämpft im Maximumbildner 3 ankommt. Bei höheren Frequenzen (z.B. ab 100 Hz) sind durchaus auch höhere Ströme bis 120 Ampere erlaubt, da die den Phasenströmen I1, I2, I3 proportionalen Signale U1, U2, U3 den Maximumbildner 3 durch die teilende Wirkung nur um den Faktor 2 reduziert erreichen.

Man erkennt aus dieser Beschreibung, dass das Teilerverhältnis der Übertragerschaltung für hohe Frequenzen in etwa dem Verhältnis zwischen den erlaubten Strömen bei niedrigen und hohen Frequenzen entsprechen sollte.

Ein erstes konkretes Ausführungsbeispiel zeigt Figur 3. Hier wird eine Schaltung gemäß der Figur 1a realisiert. Ein Umrichter 5 versorgt drei Phasen U, V, W eines Motors 6 mit Phasenströmen 11, 12, 13. Über Stromsensoren 9 wird dieser Strom erfasst.

Man macht sich in der Schaltung gemäß Figur 3 zu nutze, dass die Summe der Phasenströme I1, I2, I3 immer Null sein muss und erfasst lediglich zwei der drei Phasenströme mit Stromsensoren 9. Der dritte Phasenstrom ist dann die Summe der beiden anderen, multipliziert mit -1. Dies wird dadurch berücksichtigt, dass die Signale der beiden Stromsensoren 9 zur Bildung der proportionalen Signale U1, U2 Verstärkerschaltungen 7 zugeführt werden, während zur Bildung des proportionalen Signals U3 die Summe der beiden Sensorsignale einer invertierenden Verstärkerschaltung 8 zugeführt wird.

Die Ausgänge dieser drei Verstärkerschaltungen 7, 8 sind nun jeweils einem Tiefpass bestehend aus einer Reihenschaltung aus einem Widerstand R1, einem Kondensator C1 und einem Widerstand R2, sowie einem Teiler bestehend aus einem Widerstand R3 und einem Widerstand R4 zugeführt. Die genaue Verschaltung dieser Bauelemente kann problemlos dem Schaltplan der Figur 3 entnommen werden.

Die Ausgänge der Tiefpässe R1, C1, R2 und der Teiler R3, R4 sind einerseits direkt auf Dioden D1 geführt, und andererseits über invertierende Verstärker 8 mit Verstärkungsfaktor 1 auf weitere Dioden D1.

Durch das Verschalten aller Ausgänge der Dioden D1 ist somit ein Maximumbildner 3 entstanden, der das betragsmäßige Maximum Max aller Tiefpässe R1, C1, R2 und Teiler R3, R4 dem Vergleicher 4 (hier eine Komparatorschaltung) zuführt. Am zweiten Eingang des Komparators oder Vergleichers 4 liegt wie schon zur Figur 1a beschrieben ein um einen einer Temperatur proportionalen Wert Temp und um einen der PWM - Frequenz des Umrichters 5 proportionalen Wert F_{PWM} verminderter Referenzwert Ref an. Liegt das Maximum Max über einem Grenzwert, nämlich dem so verminderten Referenzwert Ref, so erzeugt der Komparator 4 ein Abschaltsignal S.

Die Schaltung gemäß Figur 3 wird mit drei Tiefpässen R1, C1, R2, drei Teilern R3, R4 und sechs invertierenden Verstärkerschaltungen 8 realisiert.

Invertiert man bereits unmittelbar die proportionalen Signale U1, U2, U3, so kommt man mit drei invertierenden Verstärkerschaltungen 8 aus, benötigt aber jeweils sechs Tiefpässe R1, C1, R2 und Teiler R3, R4.

Eine wesentlich vereinfachte Schutzschaltung zeigt Figur 4. Gemäß diesem Ausführungsbeispiel erfolgt nun die Invertierung der proportionalen Signale U1, U2, U3 in drei invertierenden Verstärken 8. Die so erhaltenen sechs Signale U1, U2, U3, Û1, Û2, Û3 sind dann sechs Übertragerschaltungen 10 zugeführt. Durch geeignete Dimensionierung der Bauelemente R1, C1, R2 des Tiefpasses aus der Figur 3 kann dieser alleine als Übertragerschaltung 10 wirken. Indem man den beiden Widerständen R1, R2 den gleichen Wert von beispielsweise 10 kOhm gibt, und den Kondensator C1 mit beispielsweise mit 8.2 µF auslegt, erhält man für die Übertragerschaltung 10 eine Übertragungsfunktion TP wie in der Figur 2 gezeigt. Wie schon in der Figur 3 sind die Ausgänge aller Übertragerschaltungen 10 über Dioden D1 einem Komparator 4 zugeführt, der das so gebildete Maximum Max mit einem wie oben beschrieben verminderten Referenzwert Ref vergleicht und ein Abschaltsignal S erzeugt, wenn das Maximum Max über diesem Grenzwert bzw. verminderten Referenzwert Ref liegt.

Mit den hier beschriebenen Schutzschaltungen wird auf einfache Weise ein effektiver Schutz des Umrichters 5 oder des Motors 6 vor thermischer Überlastung möglich.

## Patentansprüche

1. Schutzschaltung für einen Umrichter (5) mit mehreren Phasen (U, V, W), bei der für jeden Phasenstrom (I1, I2, 13) der Phasen (U, V, W) ein dem jeweiligen Phasenstrom (I1, I2, I3) proportionales Signal (U1, U2, U3) einer Übertragerschaltung (1, 2, 10, R1, C1, R2, R3, R4) aufgeschaltet ist, die für Frequenzen des jeweiligen Signals (U1, U2, U3) unterhalb und im Bereich einer Grenzfrequenz (fg) als Tiefpassfilter (1) mit der Grenzfrequenz (fg) und oberhalb der Grenzfrequenz (fg) als Teiler (2) für das jeweilige Signal (U1, U2, U3) wirkt, und bei der die Ausgänge der Übertragerschaltungen (1, 2, 10, R1, C1, R2, R3, R4) einem Maximumbildner (3, D1) zum Bilden eines betragsmäßigen Maximums (Max) der Ausgänge der Übertragerschaltung (1, 2, 10, R1, C1, R2, R3, R4) aufgeschaltet sind, wobei das Maximum (Max) auf einen Vergleicher (4) geschaltet ist, in dem das Maximum (Max) mit einem Referenzwert (Ref) verglichen wird.

2. Schutzschaltung nach Anspruch 1, **dadurch gekennzeichnet, dass** vom Vergleicher (4) ein Abschaltsignal (S) erzeugt wird, wenn der Ausgang (Max) des Maximumbildners (3) über dem Referenzwert (Ref) liegt.

3. Schutzschaltung nach Anspruch 1 oder 2, **dadurch gekennzeichnet, dass** dem Vergleicher (4) ein einer Temperatur proportionaler Wert (Temp) aufgeschaltet ist, der den Referenzwert (Ref) erniedrigt.

4. Schutzschaltung nach Anspruch 3, **dadurch gekennzeichnet, dass** der einer Temperatur proportionale Wert (Temp) einer Temperatur von Bauelementen, insbesondere von Leistungshalbleitern im Umrichter (1) entspricht.

5. Schutzschaltung nach Anspruch 3, **dadurch gekennzeichnet, dass** der einer Temperatur proportionale Wert (Temp) einer Temperatur in einem an den Umrichter (5) angeschlossenen Motor (6), insbesondere einer Wicklungstemperatur im Motor (6) entspricht.

6. Schutzschaltung nach einem der Ansprüche 1 - 5, **dadurch gekennzeichnet, dass** der Umrichter (5) mit einer PWM - Frequenz betreibbar ist, und dass dem Vergleicher (4) ein der PWM - Frequenz proportionaler Wert (F_{PWM}) aufgeschaltet ist, der den Referenzwert (Ref) erniedrigt.

7. Schutzschaltung nach einem der vorhergehenden Ansprüche, **dadurch gekennzeichnet, dass** die Übertragerschaltung (10) als frequenzabhängig wirkende Reihenschaltung aus einem ersten Widerstand (R1), einem Kondensator (C1) und einem zweiten Widerstand (R2) realisiert ist, wobei der Ausgang der Übertragerschaltung (10) zwischen dem ersten Widerstand (R1) und dem Kondensator (C1) liegt, und wobei diese Reihenschaltung bei einer Frequenz des Phasenstromes (11, 12, 13) im Bereich und unterhalb der Grenzfrequenz (fg) als Tiefpass (2) mit der Grenzfrequenz (fg) wirkt, und oberhalb der Grenzfrequenz (fg) als Teiler (1) wirkt.

## Claims

1. A protective circuit for a converter (5) comprising a plurality of phases (U, V, W), in the case of which a signal (U1, U2, U3), which is proportional to the respective phase current (I1, I2, I3), is connected to a transfer circuit (1, 2, 10, R1, C1, R2, R3, R4) for each phase current (I1, I2, I3) of the phases (U, V, W), which acts as low-pass filter (1) with the cut-off frequency (fg) for frequencies of the respective signal (U1, U2, U3) below and in the range of a cut-off frequency (fg) and as divider (2) for the respective signal (U1, U2, U3) below the cut-off frequency (fg), and in the case of which the outputs of the transfer circuits (1, 2, 10, R1, C1, R2, R3, R4) are connected to a maximum creator (3, D1) for forming a maximum (Max) of the outputs of the transfer circuit (1, 2, 10, R1, C1, R2, R3, R4), wherein the maximum (Max) is connected to a comparator (4), in which the maximum (Max) is compared to a reference value (Ref).

2. The protective circuit according to claim 1, **characterized in that** a switch-off signal (S) is created by the comparator (4) when the output (Max) of the maximum creator (3) lies above the reference value (Ref).

3. The protective circuit according to claim 1 or 2, **characterized in that** a value (Temp), which is proportional to a temperature and which lowers the reference value (Ref), is connected to the comparator (4).

4. The protective circuit according to claim 3, **characterized in that** the value (Temp), which is proportional to a temperature, corresponds to a temperature of components, in particular of power semiconductors in the converter (1).

5. The protective circuit according to claim 3, **characterized in that** the value (Temp), which is proportional to a temperature, corresponds to a temperature in a motor (6), which is connected to the converter (5), in particular to a winding temperature in the motor (6).

6. The protective circuit according to one of claims 1-5, **characterized in that** the converter (5) can be operated by means of a PWM frequency and **in that** a value (F_{PWM}), which is proportional to the PWM frequency and which lowers the reference value (Ref), is connected to the comparator (4).

7. The protective circuit according to one of the preceding claims, **characterized in that** the transfer circuit (10) is realized as a series connection, which acts dependent on the frequency, of a first resistor (R1), a capacitor (C1) and a second resistor (R2), wherein the output of the transfer circuit (10) lies between the first resistor (R1) and the capacitor (C1), and wherein this series connection acts as low-pass (2) with the cut-off frequency (fg) at a frequencies of the phase current (I1, I2, I3) in the range and below the cut-off frequency (fg) and as divider (1) above the cut-off frequency (fg).

## Revendications

1. Circuit protecteur pour un convertisseur de fréquence (5) avec plusieurs phases (U, V, W), dans lequel, à chaque courant de phase (I1, I2, I3) des phases (U, V, W) est attribué un signal (U1, U2, U3), proportionnel au courant de phase respectif (I1, I2, I3), d'un circuit de transmission (1, 2, 10, R1, C1, R2, R3, R4) agissant en tant que filtre passe-bas (1) avec la fréquence seuil (fg) pour les fréquences de signal (U1, U2, U3) respectives en-dessous et dans la région d'une fréquence seuil (fg), et en tant que diviseur (2) au-dessus de la fréquence seuil (fg), pour chacun des signaux (U1, U2, U3), et dans lequel les sorties des circuits de transmission (1, 2, 10, R1, C1, R2, R3, R4) sont attribués à un formateur de maximum (3, D1) pour la formation d'un maximum (Max) des sorties du circuit de transmission (1, 2, 10, R1, C1, R2, R3, R4), où le maximum (Max) est commuté sur un comparateur (4) en comparant le maximum (Max) avec une valeur de référence (Ref).

2. Circuit protecteur selon la revendication 1, **caractérisé en ce qu'**un signal d'arrêt (S) est produit par le comparateur (4) lorsque la sortie (Max) du formateur de maximum (3) est supérieure à la valeur de référence (Ref).

3. Circuit protecteur selon la revendication 1 ou 2, **caractérisé en ce qu'**une valeur (Temp) proportionnelle à une température diminuant la valeur de référence (Ref) est attribuée au comparateur (4).

4. Circuit protecteur selon la revendication 3, **caractérisé en ce que** la valeur (Temp) proportionnelle à une température correspond à une température d'éléments de construction, en particulier de semi-conducteurs de puissance dans le convertisseur de fréquence (1).

5. Circuit protecteur selon la revendication 3, **caractérisé en ce que** la valeur (Temp) proportionnelle à une température correspond à une température dans un moteur (6) raccordé au convertisseur de fréquence (5), en particulier à une température d'enroulement dans le moteur (6).

6. Circuit protecteur selon l'une des revendications 1 à 5, **caractérisé en ce que** le convertisseur de fréquence (5) est actionnable avec une fréquence PWM, et **en ce qu'**une valeur (F_{PWM}) proportionnelle à la fréquence PWM diminuant la valeur de référence (Ref) est attribuée au comparateur (4).

7. Circuit protecteur selon l'une des revendications précédentes, **caractérisé en ce que** le circuit de transmission (10) est réalisé en tant que montage en série, agissant en fonction de la fréquence, à partir d'une première résistance (R1), d'un condensateur (C1) et d'une deuxième résistance (R2), la sortie du circuit de transmission (10) se trouvant entre la première résistance (R1) et le condensateur (C1), et ce montage en série agissant comme passe-bas (2) avec la fréquence seuil (fg) pour une fréquence du courant de phase (I1, I2, I3) dans la région et en-dessous de la fréquence seuil (fg), et comme diviseur (1) au-dessus de la fréquence seuil (fg).
